# EUROPEAN PATENT APPLICATION

(11) **EP 4 421 012 A1**
(43) Date of publication of application: **28.08.2024**
(21) Application number: 23212953.6
(22) Date of filing: 29.11.2023
(51) Int. Cl.: B65H 63/06, B65H 69/06, G05B 19/418

(54) **PREDICTIVE QUALITY CONTROL SYSTEM AND METHOD OF TEXTILE SPLICES, AND THE RELATED TEXTILE MACHINE**

(30) Priority: 27.02.2023 IT 202300003387
(71) Applicant: Savio Macchine Tessili S.p.A., 33170 Pordenone (IT)
(72) Inventor: D'AGNOLO, Fabio, I-33170 PORDENONE (IT); FLORIDUZ, Moreno, I-33170 PORDENONE (IT); SALA, Riccardo, I-33170 PORDENONE (IT)
(74) Representative: Mitola, Marco

(57) **Abstract**

Predictive control system (4) of the quality of splices (12) of textile yarns (8) comprising means for detecting (16) the geometric characteristics of the splice (12) of threads of a textile yarn (8) and/or means for acquiring (18) splicing process parameters of said threads of textile yarn (8), a database (20) comprising at least one qualitative splice class (22), a control unit (28), operatively connected to said detection means (16) and/or to said acquisition means (18), and to said database (20), configured to:
- associating the detected geometric characteristics and/or the process parameters acquired with at least one qualitative splice class (22) comprised in the database (20), so as to operate a classification of the splice (12) between said qualitative splice classes (22) present in the database (20), associating with the splice (12) a value of at least one qualitative parameter to be compared with a corresponding value chosen as a quality reference,
- whether or not to cut the splice (12) on the basis of a comparison between the value of the at least one qualitative parameter of the qualitative splice class (22) and said corresponding value set as a qualitative reference for the splice (12)

## Description

### FIELD OF APPLICATION

The present invention relates to a predictive quality control system and method of textile splices, and the related textile machine.

### STATE OF THE ART

As is known, the processing of yarn in a winding machine undergoes a forced interruption whenever an accidental breakage of the yarn occurs, or a cut is made due to the detection of a defect.

For example, in a winding machine, the yarn which is unravelled from the spool is subjected in real time to a check by means of a clearer which, with appropriate sensors (of the optical or capacitive type, for example), checks instant by instant whether the defects of the yarn are acceptable or not.

When the characteristics of the irregularities go beyond the preset eligibility range, the yarn is cut and the splicing cycle is started, which involves the recovery of the two threads created by cutting the yarn and their insertion into the yarn splicer device, for the restoration of the continuity of the yarn. At this point the splice is analysed by the clearer and, if it falls within the allowed tolerance threshold, the winding resumes regularly.

The quality control of a splice is one of the most important aspects to be taken into account to ensure high reliability performance of the yarn (e.g., hold, but not only) in the subsequent steps of the textile process, such as dyeing, warping, weaving and knitting.

For this reason, the splice, being by its very nature a singularity of the yarn, must be carefully analysed to prevent the formation of defects and/or the occurrence of subsequent production inefficiencies.

In this sense, the known art does not provide for a real standardised procedure for assessing the quality of a splice under working conditions. Typically, in the initial setup step of the splicer, a certain number of splices are made in the different possible configurations which the device can assume and, once the one most suited to the specific process needs is identified, a number of tests is carried out such as to allow the repeatability of the main performance parameters of the splice, such as the strength and the elasticity at break. If these are acceptable, they are no longer checked, and this is basically due to the fact that the splice is considered as a stable process over time, whereby the number of splices which does not fall within the expected quality limits is still statistically very low.

From this point on, the control of the splice is entrusted exclusively to the clearer, which analyses it as a defect to understand only if it is too large or thin with respect to the form limits set as acceptable.

This procedure certainly represents a simple and inexpensive solution, but in fact it does not ensure absolutely that the splice may not, for example, break in the subsequent steps of the textile process; on the contrary, the number of yarns which are used simultaneously with the frame or in knitting is such as to make a possibility of breakage more than certain, with consequent problems in terms of machine stops and defects of the fabric obtained.

Similarly, it may occur that splices deemed acceptable by the clearer can absorb the dyeing colour unevenly, to the detriment of the chromatic homogeneity of the garment produced.

That is, in the known art the quality control of the splice is simply delegated to the clearer without there being any correlation with the characteristic parameters which define the quality of the splice.

Therefore, it may occur that the clearer cuts geometrically deformed splices but with excellent strength performance, as well as that it lets aesthetically acceptable splices pass which are poor in terms of quality and mechanical strength.

This results in a non-optimal control of the quality of the splices, resulting in production inefficiencies, machine stops and defects in the finished product.

### PRESENTATION OF THE INVENTION

The need is therefore felt to resolve the drawbacks and limitations mentioned with reference to the prior art.

Such needs are met by a predictive quality control system of textile yarn splices in accordance with claim 1, by a textile machine in accordance with claim 18 and by a predictive quality method of textile yarn splices in accordance with claim 21.

### DESCRIPTION OF THE DRAWINGS

Further features and advantages of the present invention will be more clearly comprehensible from the description given below of preferred and non-limiting embodiments thereof, in which:

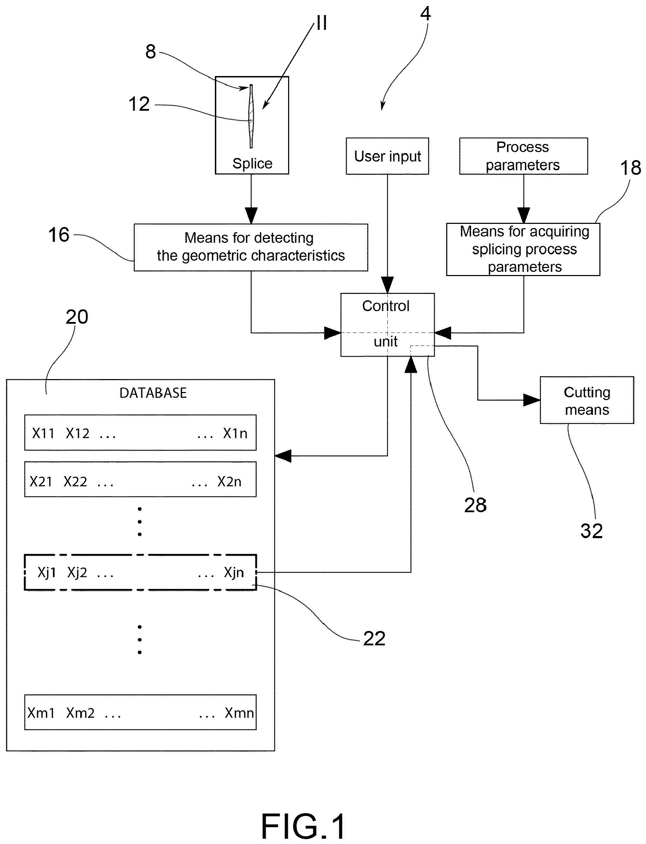

figure 1 depicts a schematic view, with relative flow chart, of a predictive quality control system of textile yarn splices in accordance with an embodiment of the present invention;

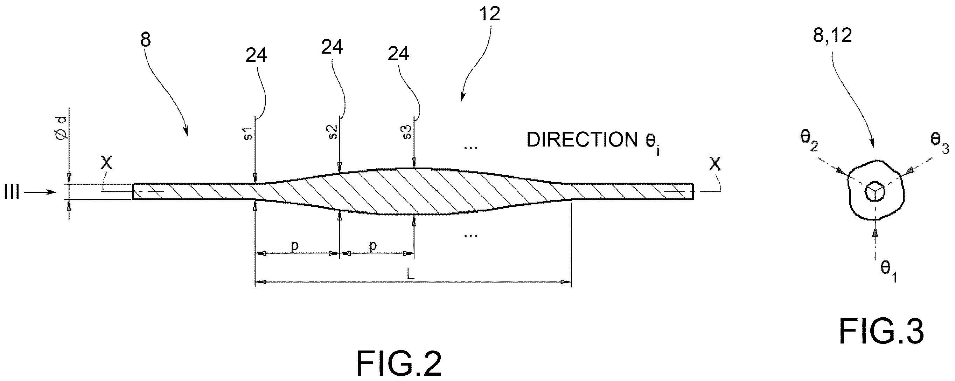

figure 2 depicts an enlarged view of the detail II indicated in figure 1;
figure 3 depicts a side view of the detail II from the side of arrow III indicated in figure 2.

The elements or parts of elements common to the embodiments described below will be indicated using the same reference numerals.

### DETAILED DESCRIPTION

With reference to the aforesaid figures, reference numeral 4 globally indicates a predictive quality control system of textile yarn splices with 8.

It should be noted that the term thread or single thread or continuous thread refers to a single filament or continuous filament (for example in the case of silk, artificial or synthetic fibres), while the term yarn refers to a group of fibrils of varying lengths which are paralleled and joined together by twisting. Hereinafter, one or the other term will be used indifferently, it being understood that the applications of the present invention are not limited to one or the other type.

The predictive quality control system 4 of the splices 12 of textile yarns 8 comprises means for detecting 16 the geometric characteristics of the splices 12 of threads of a textile yarn 8 to be analysed and/or means for acquiring 18 process parameters.

In accordance with a possible embodiment, said means for detecting 16 the geometric characteristics of the splice 12 comprise capacitive means.

In accordance with a possible embodiment, said means for detecting 16 the geometric characteristics of the splice 12 comprise optical means.

In accordance with a possible embodiment, said means for detecting 16 the geometric characteristics of the splice 12 comprise ultrasonic means.

In accordance with a possible embodiment, said means for detecting 16 the geometric characteristics of the splice 12 comprise millimetre wave means.

Obviously, it is possible to combine embodiments which include capacitive means and/or optical means and/or ultrasonic means and/or millimetre wave means, as means for detecting 16 the geometric characteristics of the splice 12.

In accordance with a particularly advantageous embodiment, said detection means 16 comprise at least one vision system and/or at least one camera. Thereby, by having an image of the splice, it is possible to characterise it completely and accurately from the geometric and/or shape point of view.

For example, said geometric characteristics of the splice 12 can comprise at least one characteristic dimension of the splice 12 and/or the shape of the splice 12 itself.

In accordance with a possible embodiment, the detection means 16 are configured to capture more than one image of the same splice 12; it is thereby possible to obtain a very faithful three-dimensional scan of the splice area.

For example, said detection means 16 can operate the recognition of the splice 12 in a static manner, i.e., when the thread 8 is stopped.

Alternatively, said detection means 16 can operate the recognition of the splice 12 in a dynamic manner, i.e., when the thread 8 is moving. In particular, such a dynamic acquisition method is particularly advantageous, because it allows the acquisition of the splice 12 without losing productivity.

In accordance with a possible embodiment, the at least one characteristic dimension of the splice 12 comprises the thickness 24 of the splice 12 at at least one point of the splice 12, said thickness 24 being measured perpendicularly to a main extension axis X-X of the yarn 8 at said splice 12.

In accordance with a possible embodiment, said thickness 24 of the splice 12 is acquired at a constant pitch P, along the main extension axis X-X of the yarn 8.

In accordance with a possible embodiment, said pitch P is comprised between 0.1 mm and 2 mm.

In accordance with a possible embodiment, the acquisition of the geometric characteristics of the splice 12, by said means for detecting 16 the geometric characteristics of the splice 12,occurs along at least one direction θ₁ substantially perpendicular and incident with said main extension axis X-X of the yarn 8.

In accordance with a possible embodiment, the acquisition of the geometric characteristics of the splice 12, by said means for detecting 16 the geometric characteristics of the splice 12, occurs along three different directions θ_{1,2,3} substantially perpendicular and incident with said main extension axis X-X of the yarn 8.

Preferably, said three directions θ_{1,2,3} are mutually angularly offset by 120° in the circumferential direction with respect to said main extension axis X-X. It is thereby possible to characterize the splice 12 more completely from the three-dimensional point of view, without resorting to a large number of recognition directions.

As mentioned above, the predictive quality control system 4 of the splices 12 of textile yarns 8 can comprise means for acquiring 18 process parameters.

In accordance with a possible embodiment, said process parameters comprise the ambient temperature and/or the relative humidity of the environment and/or the type of yarn and/or the yarn titre and/or the operating times of the splicer and/or the type of splicing chamber and/or the pneumatic supply pressure of the splicer and/or the type of preparation device of the threads of yarn to be spliced.

In accordance with a possible embodiment, the predictive system 4 comprises at least one database 20 comprising at least one qualitative splice class 22, i.e., at least one "type" splice characterized and extrapolated in the laboratory by a large number of tests on splice samples.

For example, said at least one qualitative splice class 22 comprises geometric characteristics of the class and/or process parameters of the class and/or at least one qualitative parameter of the class.

For example, said at least one qualitative parameter of the class comprises the breaking load and/or the breaking strength and/or the percentage elongation at break and/or the ability to absorb the dyeing colour.

The predictive control system 4 further comprises a control unit 28, operatively connected to said detection means 16 and/or to said acquisition means 18, and to said database 20, configured to associate the acquired geometric characteristics and/or the acquired process parameters with at least one qualitative class comprised in the database 20, and to operate or not operate the cutting of the splice 12 on the basis of a comparison between a value of the at least one qualitative parameter of the class and a corresponding input value set by the user as a qualitative reference for the splice 12.

That is, based on the geometric characteristics of the splice 12 detected and/or the process parameters acquired, the control unit 28 operates a classification of the splice 12 among the qualitative classes of splices 22 present in the database 20, associating them with at least one qualitative parameter to be compared with a corresponding setpoint chosen as a quality threshold value.

For example, if the qualitative parameter is the breaking load, the control unit 28 may command the cutting of the splice 12 if the presumed breaking load of the qualitative splice class 22 associated with the geometric characteristics of the splice 12 and/or the specific process parameters is less than a predetermined limit. In this case, the control unit 28 commands a preventive cut to ensure the quality standards required of the splice 12 and thus cancel the statistical risk that it may break in the subsequent processing of the yarn 8.

Obviously, the comparison is not intended in a limiting sense, being able to be conducted with reference to any parameter chosen as an index of the quality of the splice 12 and in particular to more than one parameter, to the advantage of the versatility of the user's request.

According to a particular embodiment, the qualitative optimisation occurs with respect to the geometric characteristics of the splice 12. Thereby, the predictive system 4 operates in a de facto manner equivalent to a clearer, but with a much wider versatility of use, because in any case the user can decide to optimise the quality of the splice 12 according to a customisable parameter filter.

Advantageously, said database 20 is located on a cloud platform. Thereby the database 20 is continuously updated so as to more confidently map the qualitative classes of the splices and allow a continuous update of the comparison algorithm.

The predictive control system 4 is typically applied to a textile machine (not shown), such as a winding machine or an air-jet spinning machine.

In fact, the aforementioned problems concerning the need to ensure a high reliability of the yarn 8 in the later process steps, such as weaving, knitting and/or dyeing, arise precisely during the rewinding of the spool yarn 8 in a reel and/or during the production step thereof.

Said textile machine comprises cutting means 32 which are operatively connected to the control unit 28 which, as seen, controls the operation thereof on the basis of the classification and comparison of at least one qualitative parameter.

As can be appreciated from the description, the present invention makes it possible to overcome the drawbacks mentioned in the prior art.

In particular, the present invention solves the drawbacks of the prior art in that it allows to predict whether the splice, on the basis of a combination of shape/size and process parameters, has unacceptable quality characteristics and, if so, to cut and repeat it.

This greatly improves the reliability of the yarn in the subsequent steps of the textile process.

Furthermore, in contrast to the known clearers which are configured exclusively to remove aesthetic defects, the invention allows to cut with a statistically high confidence the splices which, although within the tolerated form limits, have unacceptable quality standards, for example in terms of mechanical strength (or even other performance) in the subsequent steps of the textile process, such as dyeing, warping, weaving and knitting.

A person skilled in the art may make numerous modifications and variations to the solutions described above so as to satisfy contingent and specific requirements.

The scope of protection of the present invention is defined by the following claims.

## Claims

1. Predictive control system (4) of the quality of splices (12) of textile yarns (8) comprising
- means for detecting (16) the geometric characteristics of the splice (12) of threads of a textile yarn (8) and/or means for acquiring (18) splicing process parameters of said threads of textile yarn (8),
- a database (20) comprising at least one qualitative splice class (22),
- a control unit (28), operatively connected to said detection means (16) and/or to said acquisition means (18), and to said database (20), configured to:
- associating the detected geometric characteristics and/or the process parameters acquired with at least one qualitative splice class (22) comprised in the database (20), so as to operate a classification of the splice (12) between said qualitative splice classes (22) present in the database (20), associating with the splice (12) a value of at least one qualitative parameter to be compared with a corresponding value chosen as a quality reference,
- whether or not to cut the splice (12) on the basis of a comparison between the value of the at least one qualitative parameter of the qualitative splice class (22) and said corresponding value set as a qualitative reference for the splice (12).

2. Predictive control system (4) according to claim 1, wherein said at least one qualitative parameter of the qualitative splice class (22) comprises the breaking load of the yarn (8) and/or the breaking strength of the yarn (8) and/or the percentage elongation at break of the yarn (8) and/or the ability to absorb the dyeing colour.

3. Predictive control system (4) according to claim 1 or 2, wherein said geometric characteristics of the splice (12) comprise at least one characteristic dimension of the splice (12) and/or the shape of the splice (12) itself.

4. Predictive control system (4) according to claim 3, wherein the at least one characteristic dimension of the splice (12) comprises the thickness (24,S1,S2,S3) of the splice (12) at at least one point of the splice (12), said thickness (24,S1,S2,S3) being measured perpendicularly to a main extension axis (X-X) of the yarn (8) at said splice (12).

5. Predictive control system (4) according to claim 4, wherein said thickness (S1,S2,S3) of the splice (12) is acquired at a constant pitch (P), along the main extension axis (X-X) of the yarn (8).

6. Predictive control system (4) according to claim 5, wherein said pitch (P) is comprised between 0.1 mm and 2 mm.

7. Predictive control system (4) according to any one of claims 1 to 6, wherein the acquisition of the geometric characteristics of the splice (12), by said means for detecting 16 the geometric characteristics of the splice (12),occurs along at least one direction (θ) substantially perpendicular and incident with said main extension axis (X-X) of the yarn (8).

8. Predictive control system (4) according to any one of claims 1 to 7, wherein the acquisition of the geometric characteristics of the splice (12), by said means for detecting (16) the geometric characteristics of the splice (12), occurs along three different directions (θ_{1,2,3}), substantially perpendicular and incident with said main extension axis (X-X) of the yarn (8).

9. Predictive control system (4) according to claim 8, wherein said three directions (θ_{1,2,3}) are mutually angularly offset by 120° in the circumferential direction with respect to said main extension axis (X-X) .

10. Predictive control system (4) according to any one of claims 1 to 9, wherein said means for detecting (16) the geometric characteristics of the splice (12) comprise capacitive means.

11. Predictive control system (4) according to any one of claims 1 to 10, wherein said means for detecting (16) the geometric characteristics of the splice (12) comprise ultrasonic means.

12. Predictive control system (4) according to any one of claims 1 to 11, wherein said means for detecting (16) the geometric characteristics of the splice (12) comprise millimetre wave means.

13. Predictive control system (4) according to any one of claims 1 to 12, wherein said means for detecting (16) the geometric characteristics of the splice (12) comprise optical acquisition means of the geometric characteristics of the splice (12).

14. Predictive control system (4) according to claim 13, wherein said optical means for acquiring the geometric characteristics of the splice (12) comprise at least one vision system and/or at least one camera.

15. Predictive control system (4) according to claim 13 or 14, wherein said optical means for acquiring the geometric characteristics of the splice (12) are configured to capture more than one image of the splice (12) .

16. Predictive control system (4) according to any one of claims 1 to 15, wherein said process parameters, acquired by the acquisition means (18), comprise ambient temperature and/or relative humidity of the environment and/or yarn type (8) and/or yarn titre (8) and/or the operating times of a splicer and/or the type of splicing chamber of said splicer and/or the pneumatic feed pressure of the splicer and/or the type of preparation device of the treads of yarn to be spliced.

17. Predictive control system (4) according to any one of claims 1 to 16, wherein said database (20) is made available on a cloud platform.

18. Textile machine comprising a predictive control system (4) according to any one of claims 1 to 17.

19. Textile machine according to claim 18, wherein said textile machine is a winding machine or an air-jet spinning machine.

20. Textile machine according to claim 18 or 19, wherein said textile machine comprises cutting means (32) which are operatively connected to said control unit (28).

21. Predictive quality control method for textile splices (12) comprising the steps of:
- arranging means for detecting (16) the geometric characteristics of the splice (12) of threads of a textile yarn (8) made by means of a splicer, and/or arranging means for acquiring (18) splicing process parameters of said threads of textile yarn (8),
- arranging a database (20) comprising at least one qualitative splice class (22),
- arranging a control unit (28), operatively connected to said detection means (16) and/or to said acquisition means (18), and to said database (20), configured for:
- associating the detected geometric characteristics and/or the process parameters acquired with at least one qualitative splice class (22) comprised in the database (20), so as to operate a classification of the splice (12) between said qualitative splice classes (22) present in the database (20), associating with the splice (12) a value of at least one qualitative parameter to be compared with a corresponding value chosen as a quality reference,
- operating or not operating the cutting of the splice (12) on the basis of a comparison between the value of the at least one qualitative parameter of the qualitative splice class (22) and said corresponding value set as a qualitative reference for the splice (12)

22. Predictive quality control method of textile splices (12) according to claim 21 comprising the step of arranging a predictive control system (4) according to any one of claims 1 to 17.

23. Predictive control method according to claim 21 or 22, wherein acquisition means (16) operate the recognition of the splice (12) in a static manner, when the thread (8) is stopped.

24. Predictive control method according to claim 21 or 22, wherein said acquisition means (16) operate the recognition of the splice (12) dynamically, when the thread (8) is moving.

25. Predictive control method according to claim 21, 22, 23 or 24, comprising the steps of:
- making said database (20) available on a cloud platform,
- continuously updating the database (20) with laboratory tests carried out on yarn samples (8), so as to more confidently map the field of critical splices (12) to be discarded.
